(19) Europäisches Patentamt
European Patent Office
Office européen des brevets

(11) EP 4 729 771 A1

(12) **EUROPEAN PATENT APPLICATION**

(43) Date of publication:
**22.04.2026 Bulletin 2026/17**

(21) Application number: **24000124.8**

(22) Date of filing: **17.10.2024**

(51) International Patent Classification (IPC):
**F03G 7/10** $^{(2006.01)}$

(52) Cooperative Patent Classification (CPC):
**F03G 3/08**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Ciolacu, Stefan**
**500000 Brasov (RO)**

(72) Inventor: **Ciolacu, Stefan**
**500000 Brasov (RO)**

(54) **METHOD AND DEVICE FOR THE SEQUENTIAL CONVERSION OF CENTRIFUGAL AND CENTRIPETAL FORCES INTO MECHANICAL WORK**

(57) The invention relates to a method and a device that allow the sequential conversion of centrifugal and centripetal forces generated by a rotating mass into mechanical work, method which involves configuring a device in which a planetary system with satellite gears carrying rotating eccentric masses is assembled inside a casing, generating an apparent separation of centrifugal and centripetal forces by creating asymmetry; the transformation of centrifugal and centripetal forces into oscillatory motion through the centrifugal and centripetal forces of an assembly of eccentric parts and the elastic oscillatory movement of the output shaft which produces an oscillating torque that can be used to generate useful mechanical work, torque that arises directly from the conversion of centrifugal and centripetal forces.

The device according to the invention allows for the rotation at an angular speed of eccentric weights 8a, 8b, and 8c, synchronized by belts 11, around an output shaft 4 on which a rotation-limiting element 14 is rigidly fixed which forces the eccentric weights 8a, 8b, and 8c to have both a rotational movement around the central shaft 4 and a revolution around their own axes, this dual motion results in a change in the distance between the eccentric weights 8a, 8b, and 8c and the central shaft 4, movement which generates centrifugal and centripetal forces that are harnessed by the belts 11 and transmitted through the central pinions 12 to the output shaft 4.

Fig. 2

## Description

The invention relates to a method and, respectively, to a device that allows the sequential conversion of the centrifugal and centripetal force generated by a rotating mass into mechanical work.

The method involves utilizing the variation of the rotational moment of an assembly of eccentric parts that move under the action of centrifugal and centripetal forces and are connected to another device for converting mechanical energy into another type of energy.

It is known that a rotating body is subjected to two equal but oppositely directed forces: the centrifugal force (Fcf) and the centripetal force (Fcp), which have the formula

$$Fcf = \frac{mv2}{r} \; ; Fcp = -\frac{mv2}{r}$$

where $m$ is the mass, v is the rotational speed, and r is the radius of rotation.

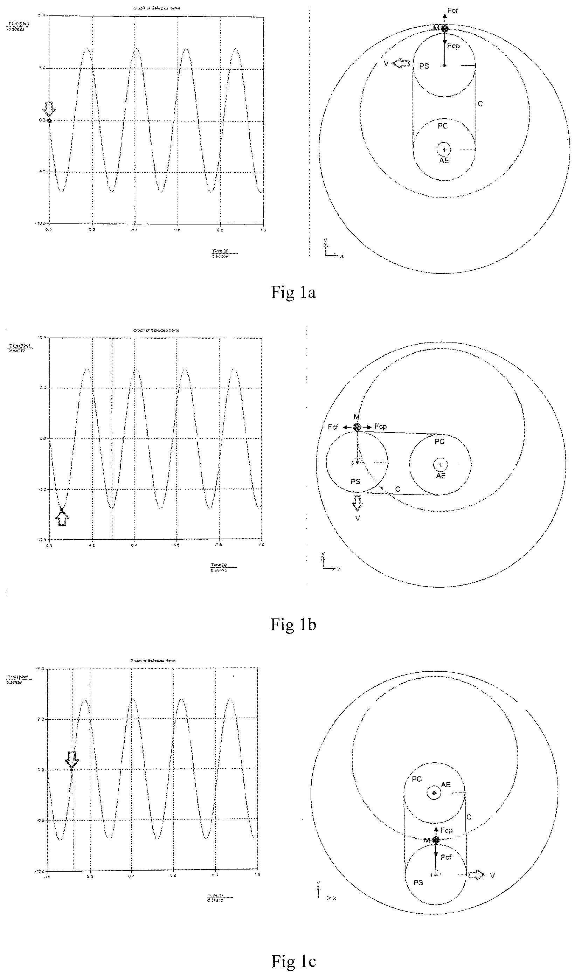

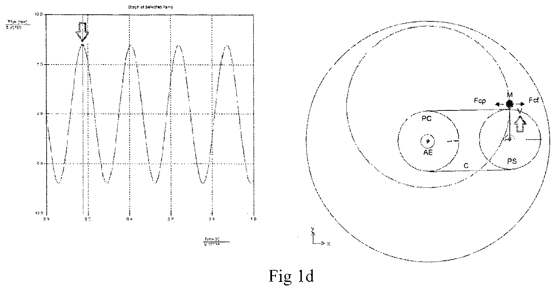

By rotating a mass M located on a satellite pinion PS with an angular velocity V around a central pinion PC situated on an output shaft AE , the rotating mass M is subjected to a centrifugal force Fcf and a centripetal force Fcp which create a torsional moment on the output shaft AE with a value corresponding to the relationship between the position of the mass M, the central pinion PC, and the angular velocity V, as illustrated in figures 1a, 1b, 1c, and 1d from below:

In the mechanical industry, there is a constant need to transform kinetic energy into efficient mechanical work. Traditionally, various mechanisms are used to achieve this transformation, but they present limitations in efficiency and complexity. This invention proposes an innovative method that sequentially utilizes centrifugal and centripetal forces to generate oscillating mechanical work that can be used in any industrial equipment.

Moreover, it is known that any part in rotational motion stores the energy used for its acceleration, so it practically behaves like a flywheel. It has the capacity to supply back the energy stored in motion when necessary, according to the principle of conservation of energy, minus the associated losses.

Devices that use centrifugal force to produce electrical or mechanical energy are known, such as those in the documents CA 3098102A1, EP2241785B1, US 2011/0048858A1, US 2011041630A1, ES 2223309B1, US 2001/0308337A1, WO 02103888A2, US 200410130227A1.

**Document** CA 3098102A1 presents a mechanism that uses centrifugal force to produce movement in a direction of displacement. The conversion of centrifugal force is carried out through rollers with a complex shape that force the eccentric mass to have a non-uniform motion, which produces undesirable accelerations, thus decreasing conversion efficiency. Additionally, the centrifugal force is applied to the entire device, including the housing, which implies significant losses due to the system's inertia.

EP 2241785B1 presents a method and a device for generating electrical energy by using an inertial vibrator that generates an alternating rotational moment applied to electric generators through one-way clutches (freewheeling clutches). Because the alternating rotational moment is further transmitted through multiplying gears and one-way clutches, the system's losses increase with each element interposed in the kinematic chain. Also, since the input motor is directly connected via gears to the eccentric weights, the alternating rotational moment generated by centrifugal forces has a direct negative impact on the energy of the input motor due to the variable difference in relative speed between the motor shaft and the shaft of the entire device, leading to low conversion efficiency.

US 2011/0048858A1 presents a complex device that combines multiple mechanical and hydraulic elements with gravity and elastic forces from springs and flywheels. In this device, the kinematic chain is complex and does not directly transform centrifugal force into mechanical power. The centripetal force is not utilized.

Document US 2011041630A1 presents a mechanism that uses centrifugal force to produce movement into a linear force for propulsive purposes. The device is an inertial displacement system and does not directly convert centrifugal forces into mechanical work. The centripetal force is not utilized.

ES 2223309B1 represents an energy transmission system consisting of a plate on which eccentric weights are mounted. These weights are rotated around their own axes by an external motor through pinions. The rotation of the eccentrics creates a variable inertial moment due to their composition, causing their supporting plate to oscillate around its own axis. This oscillation is transformed into continuous rotational motion through one-way clutches and bevel gears. Due to the transformations from rotation to oscillation and then from oscillation back to rotation, the efficiency decreases. The system does not directly convert centrifugal forces into useful mechanical work. The centripetal force is not utilized.

These documents present various arrangements of rotating parts but have the disadvantage of having a relatively large number of constituent elements. They exhibit continuous accelerations and decelerations that induce high mechanical stresses and additional energy losses, and they do not sequentially and directly convert centrifugal and centripetal forces into mechanical work.

The technical problem solved by the present invention consists in the sequential conversion of the centrifugal force and the centripetal force of rotating eccentric masses into mechanical work.

The method for sequential conversion of centrifugal and centripetal forces into oscillating mechanical work, according to the invention, involves the following steps:

- Configuring a device in which a planetary system is assembled inside a housing, with satellite pinions carrying rotating eccentric masses, engaged around a central pinion mounted on an output shaft, the pinions are connected to each other, the output shaft has rigidly mounted on it a locking element on which there are permanent magnets in repulsion, which allow the output shaft only an elastic oscillatory motion.
- Generating centrifugal and centripetal forces. An external energy source rotates the housing in which the components are assembled, thereby causing the emergence of centrifugal and centripetal forces that simultaneously act on the rotating eccentric masses on the satellite pinions.
- Apparent separation of centrifugal and centripetal forces through the generation of asymmetry. The locking element forces the satellite pinions carrying the eccentric masses to revolve around their own axes which causes the eccentric masses to be sequentially acted upon by the centrifugal and centripetal forces, producing an apparent separation of these forces relative to a complete rotation of the housing in which they are assembled, so that on half of the housing's rotation, the centrifugal force acts upon the satellite pinions, and during the other half of the rotation, the centripetal force acts, more specifically, on one side of the central output shaft, the centripetal force predominates, generated through internal stresses by the locking element, while on the other side of the central shaft, the centrifugal force is not completely counteracted, creating an asymmetry on the central shaft that experiences a series of alternating forces.
- Transforming centrifugal and centripetal forces into oscillating motion. The centrifugal and centripetal forces that constantly act upon the eccentric masses are transmitted to the central output shaft through the satellite pinions and the mechanical constraints of the system which interact and generate variable torques, imparting an elastic oscillatory motion to the central output shaft, that occurs because, on one side, the centrifugal force is counteracted by the centripetal force due to the locking mechanism and mechanical constraints, while on the other side, the centrifugal force has a more pronounced effect, not being counteracted.
- Utilization of the oscillating motion. The elastic oscillatory motion of the output shaft produces an oscillating torque that can be used to generate useful mechanical work, a torque that comes directly from the conversion of centrifugal and centripetal forces.

The device according to the invention consists of a tubular housing supported by two lateral end caps, which has an input shaft rigidly connected to one of the lateral end caps and an output shaft that is laterally supported by two bearings in the lateral end caps, housing which rests on supports via support bearings and has, assembled inside it, eccentric weights that are radially and axially equidistant, supported in the end caps of the housing through bearings, eccentric weights have rigidly fixed synchronous pinions connected by synchronous belts or chains to similar pinions, the central output shaft has rigidly fixed at its end a connecting piece for a motion-limiting element that incorporates permanent magnets mounted with their poles in opposition to other magnets; in the normal operating mode of the device, when the housing is rotated, the eccentric weights begin to be simultaneously acted upon by a centrifugal force and a centripetal force, which elastically fix the eccentric weights around a radial axial equilibrium point, which action is transmitted through the synchronous belts to the pinions on the output shaft, rotating it until the magnets interact antagonistically and creates a resistive torque that stops the rotational movement of the output shaft, forcing the eccentric weights to leave the radial axial equilibrium point and start a revolution motion around their own axes which produces a centripetal force transmitted through the belts to the output shaft when the eccentric weights approach the output shaft, and a centrifugal force when the eccentric weights move away from the output shaft transforming the initial rotational motion into an oscillatory motion with an amplitude given by the distance between the magnets and a force determined by the intensity of the centrifugal and centripetal forces.

The advantages of the invention consist of:

- Improved Energy Efficiency: The mechanical energy generated by centrifugal and centripetal forces can be converted into electrical energy or other usable forms of energy. This leads to enhanced energy efficiency, allowing the method to be utilized across a wide range of industries and applications;
- Increased Reliability and Lower Maintenance Costs: The device has fewer mechanical components that can wear out and require regular maintenance. This results in increased reliability and reduces long-term maintenance costs;
- Enhanced Safety: The reduced number of mechanical parts minimizes the risk of accidents or malfunctions during operation, thereby improving operator safety;
- Reduced Repair and Replacement Costs: With fewer components prone to wear and tear, the costs associated with repairing or replacing parts are decreased;
- Significant Cost Reduction in Production and Industrial Processes: Overall production costs or expenses related to industrial processes can be significantly reduced due to the device's efficiency and low maintenance requirements.

An example of implementing the invention is presented below, in connection with Figures 1-5, which depict:

- Figures 1a, 1b, 1c, and 1d - Explanatory diagrams illustrating the position of the mass, and the torque generated by centrifugal and centripetal forces;
- Figures 2 and 3 - Longitudinal sectional views of the device according to the invention;
- Figure 4 - Frontal sectional view of the device;
- Figure 5 - Rear view of the device.

According to the invention, the method for sequential conversion of the centrifugal and centripetal forces into oscillating mechanical work, consists in:

- Configuring a device in which a planetary system is assembled inside a housing, with satellite pinions carrying rotating eccentric masses, engaged around a central pinion mounted on an output shaft, the pinions are connected to each other, the output shaft has rigidly mounted on it a locking element on which there are permanent magnets in repulsion, which allow the output shaft only an elastic oscillatory motion.
- Generating centrifugal and centripetal forces. An external energy source rotates the housing in which the components are assembled, thereby causing the emergence of centrifugal and centripetal forces that simultaneously act on the rotating eccentric masses on the satellite pinions.

- Apparent separation of centrifugal and centripetal forces through the generation of asymmetry. The locking element forces the satellite pinions carrying the eccentric masses to revolve around their own axes which causes the eccentric masses to be sequentially acted upon by the centrifugal and centripetal forces, producing an apparent separation of these forces relative to a complete rotation of the housing in which they are assembled, so that on half of the housing's rotation, the centrifugal force acts upon the satellite pinions, and during the other half of the rotation, the centripetal force acts, more specifically, on one side of the central output shaft, the centripetal force predominates, generated through internal stresses by the locking element, while on the other side of the central shaft, the centrifugal force is not completely counteracted, creating an asymmetry on the central shaft that experiences a series of alternating forces.
- Transforming centrifugal and centripetal forces into oscillating motion. The centrifugal and centripetal forces that constantly act upon the eccentric masses are transmitted to the central output shaft through the satellite pinions and the mechanical constraints of the system which interact and generate variable torques, imparting an elastic oscillatory motion to the central output shaft, that occurs because, on one side, the centrifugal force is counteracted by the centripetal force due to the locking mechanism and mechanical constraints, while on the other side, the centrifugal force has a more pronounced effect, not being counteracted.
- Utilization of the oscillating motion. The elastic oscillatory motion of the output shaft produces an oscillating torque that can be used to generate useful mechanical work, a torque that comes directly from the conversion of centrifugal and centripetal forces.

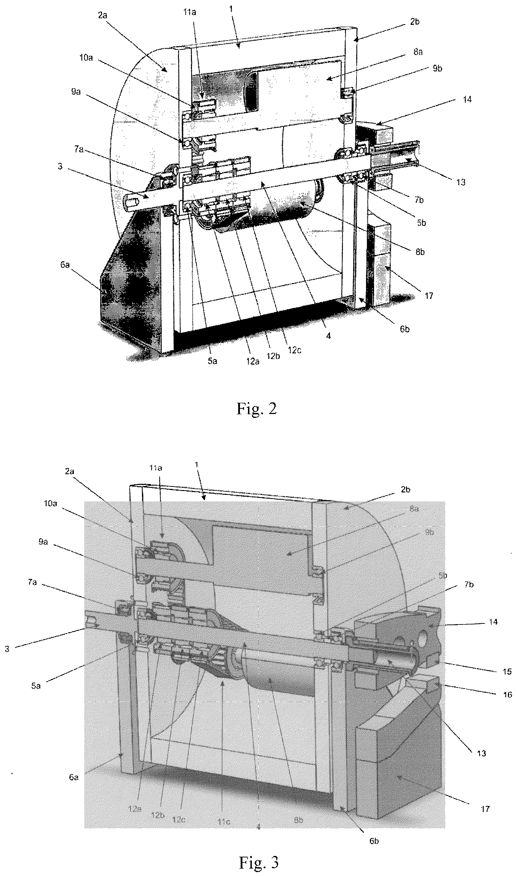

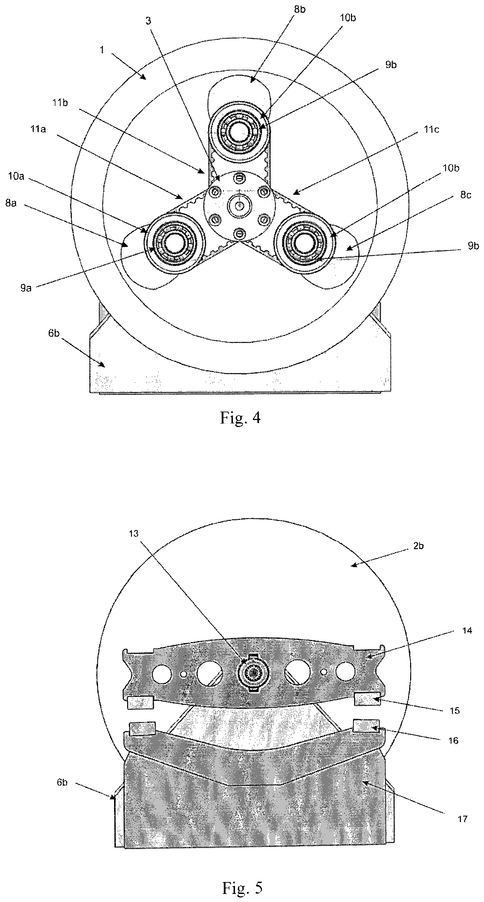

The device to which the method of sequential conversion of centrifugal force and centripetal force into mechanical work is applied is constructed according to Figures 2, 3, 4, and 5 consists of a tubular casing 1 supported by two lateral end caps 2a and 2b which has two colinear central axes, an input shaft 3 connected to a motor M (not shown) and rigidly attached to one of the lateral end caps 2a, and an output shaft 4 which is laterally supported by a first pair of bearings 5a and 5b within the lateral end caps 2a and 2b of casing 1.

The casing 1 is supported on mounts 6a and 6b via supporting bearings 7a and 7b.

Inside the casing 1, eccentric weights 8a, 8b, and 8c are mounted radially and axially equidistant from the input shaft 3. These weights are supported in the lateral end caps 2a and 2b by another pair of bearings 9a and 9b. The eccentric weights 8a, 8b, and 8c have rigidly attached synchronous pinions 10a, 10b, and 10c, which are connected via synchronous belts 11a, 11b, and 11c to matching pinions 12a, 12b, and 12c mounted on the central output shaft 4.

At the other end of the output shaft 4, a connecting piece 13 is rigidly attached for a movement-limiting element 14, which incorporates permanent magnets 15 mounted with their poles opposing those of magnets 16 arranged on a support 17.

In the device's normal operating mode, when the casing 1 is rotated via the input shaft 3, a centrifugal force begins to act on the eccentric weights 8a, 8b, and 8c, which elastically stabilize the eccentrics around a radial axial equilibrium point.

At that moment, through the synchronous belts 11, the pinions 12a, 12b, and 12c on the output shaft 4 are actuated, rotating it until the permanent magnets 15 on the limiting element 14 interact antagonistically with the magnets 16 on the support 17 which creates a resistive torque that stops the rotational movement of the output shaft 4. Thus, the eccentric weights 8a, 8b, and 8c depart from the point of radial axial equilibrium and begin a revolution around their own axes, producing a centripetal force that is transmitted via the belts 11a, 11b, and 11c to the output shaft 4. When the eccentric weights 8a, 8b, and 8c approach the output shaft 4, they are sequentially acted upon predominantly by the centripetal force, and when they move away from the output shaft 4, they are predominantly acted upon by the centrifugal force. This transforms the initial revolving motion into an oscillatory motion with an amplitude given by the distance between the magnets 15 and 16, and with a force determined by the intensity of the centrifugal and centripetal forces.

The eccentric weights 8a, 8b, and 8c exhibit two simultaneous movements: a rotational motion around the central pinion and a revolutionary motion around their own axes. By varying the distance at which the eccentric weights 8a, 8b, and 8c are positioned relative to the central pinion 3, there is a change in the distance of the centre of gravity of the eccentric weights compared to the central axis. This results in a variation of the moment of inertia of the entire assembly.

Thus, during the period when the eccentric weights 8a, 8b, and 8c move closer to the centre of rotation, the central pinion, the angular velocity of the entire device increases due to the principle of conservation of angular momentum, without any additional external energy input. Conversely, when the eccentric weights 8a, 8b, and 8c return to their positions at the maximum radius and move away from the central pinion 3, the angular velocity of the device decreases back to its initial value.

With the help of belts 11a, 11b, and 11c, the centrifugal and centripetal forces acting on the eccentric weights are harnessed and transmitted to the output shaft 4.

The movement of the eccentric weights toward and away from the central output shaft creates a sinusoidally variable torque within the casing which tends to accelerate and decelerate the casing connected to the drive motor M, according to the principle of conservation of angular momentum, the torque directly influences the energy required to rotate the entire device, a variation that can be reduced by constructing a heavy casing with a flywheel effect.

To further diminish the effect of torque variation, two or more such devices can be used, synchronized and phase-shifted relative to each other, so that the variation of the combined moment of inertia becomes zero.

When an electric drive motor M is used at the input, it can have a dual role, as both a motor and a generator, operating sequentially in both roles. It functions as a motor when the device's moment of inertia increases, decreasing the rotational speed, and as a generator when the moment of inertia decreases, increasing the rotational speed, thus recovering part of the energy required for rotation.

## Claims

1. Method for sequential conversion of the centrifugal force and centripetal force into mechanical work, **characterized by** involving the following steps:

    - Configuring a device in which a planetary system is assembled inside a housing, with satellite pinions carrying rotating eccentric masses, engaged around a central pinion mounted on an output shaft, the pinions are connected to each other, the output shaft has rigidly mounted on it a locking element on which there are permanent magnets in repulsion, which allow the output shaft only an elastic oscillatory motion.

    - Generating centrifugal and centripetal forces. An external energy source rotates the housing in which the components are assembled, thereby causing the emergence of centrifugal and centripetal forces that simultaneously act on the rotating eccentric masses on the satellite pinions.

    - Apparent separation of centrifugal and centripetal forces through the generation of asymmetry. The locking element forces the satellite pinions carrying the eccentric masses to revolve around their own axes which causes the eccentric masses to be sequentially acted upon by the centrifugal and centripetal forces, producing an apparent separation of these forces relative to a complete rotation of the housing in which they are assembled, so that on half of the housing's rotation, the centrifugal force acts upon the satellite pinions, and during the other half of the rotation, the centripetal force acts, more specifically, on one side of the central output shaft, the centripetal force predominates, generated through internal stresses by the locking element, while on the other side of the central shaft, the centrifugal force is not completely counteracted, creating an asymmetry on the central shaft that experiences a series of alternating forces.

    - Transforming centrifugal and centripetal forces into oscillating motion. The centrifugal and centripetal forces that constantly act upon the eccentric masses are transmitted to the central output shaft through the satellite pinions and the mechanical constraints of the system which interact and generate variable torques, imparting an elastic oscillatory motion to the central output shaft, that occurs because, on one side, the centrifugal force is counteracted by the centripetal force due to the locking mechanism and mechanical constraints, while on the other side, the centrifugal force has a more pronounced effect, not being counteracted.

    - Utilization of the oscillating motion. The elastic oscillatory motion of the output shaft produces an oscillating torque that can be used to generate useful mechanical work, a torque that comes directly from the conversion of centrifugal and centripetal forces

2. Device for sequential conversion of centrifugal force and centripetal force into mechanical work, **characterized by** being composed of a tubular casing (1) supported by two lateral end caps (2a, 2b), which has two different central axes, an input shaft (3) connected to a drive motor (M) not shown, rigidly attached to one of the lateral end caps (2a), and an output shaft (4) which is laterally supported by two bearings (5a, 5b) in the casing's end caps, casing which is supported on mounts (6a, 6b) via supporting bearings (7a, 7b), and internally assembled, radially and axially equidistant, are eccentric weights (8a, 8b, 8c) supported in the casing's end caps (1) through another pair of bearings (9a, 9b), the eccentric weights have rigidly attached synchronous pinions (10a, 10b, 10c) which are connected via synchronous belts (11a, 11b, 11c) to matching pinions (12a, 12b, 12c) arranged on the central output shaft (4), shaft that has rigidly fixed at its end a connecting piece (13) for a movement-limiting element (14) which incorporates permanent magnets (15) mounted with poles opposing those of other magnets (16) arranged on a support (17).

3.  Device for sequential conversion of centrifugal force and centripetal force into mechanical work according to claim 2, **characterized in that,** in normal operating conditions, when the casing (1) is rotated via the input shaft (3), a resistive torque is created that stops the rotational movement of the output shaft (4), which forces the eccentric weights to leave the point of radial axial equilibrium and to start a revolution around their own axes, such that a centripetal force is produced when the eccentric weights (8a, 8b, 8c) approach the output shaft (4), and a centrifugal force when the eccentric weights (8a, 8b, 8c) move away from the output shaft (4), which transforms the initial revolution movement of the eccentric weights into an oscillatory movement with an amplitude and force given by the intensity of the centrifugal and centripetal forces, creating within the casing a sinusoidally variable torque that tends to accelerate and decelerate the casing connected to the drive motor, torque which directly influences the energy required to rotate the entire assembly and can be reduced by constructing a heavy casing with a flywheel effect.

4.  Device according to claims 2 and 3, **characterized in that**, to further reduce the effect of torque variation, two or more such devices can be used, synchronized and phase-shifted relative to each other, so that the variation of the moment of inertia of the casing is zero.

5.  Device according to claims 2 and 3, **characterized in that** the drive motor (M) can have a dual role, as both a motor and a generator, operating in both roles, it functions as a motor when the device's moment of inertia increases, decreasing the rotational speed, and as a generator when the device's moment of inertia decreases, increasing the rotational speed, thus recovering part of the energy required for rotation.

Fig. 2

Fig. 3

Fig. 4

Fig. 5

Fig 1a

Fig 1b

Fig 1c

Fig 1d

Europäisches
Patentamt

European
Patent Office

Office européen
des brevets

# EUROPEAN SEARCH REPORT

**Application Number**

EP 24 00 0124

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/130154 A1 (LEVINY GEOFFREY WILLIAM GOOD [AU]) 13 July 2023 (2023-07-13) * the whole document * ----- | 1-5 | INV. F03G7/10 |
| X | US 2009/318256 A1 (LEVINY GEOFFREY WILLIAM GOOD [AU]) 24 December 2009 (2009-12-24) * the whole document * ----- | 1-5 | |
| X | WO 2014/026269 A1 (L T MACHINES & TOOLS INC [CA]) 20 February 2014 (2014-02-20) * the whole document * ----- | 1-5 | |

**TECHNICAL FIELDS SEARCHED (IPC)**

F03G

The present search report has been drawn up for all claims

| Place of search | Date of completion of the search | Examiner |
|---|---|---|
| Munich | 5 March 2025 | Alquezar Getan, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

2

## ANNEX TO THE EUROPEAN SEARCH REPORT
## ON EUROPEAN PATENT APPLICATION NO.

EP 24 00 0124

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2025

| Patent document cited in search report | Publication date | Patent family member(s) | | Publication date |
|---|---|---|---|---|
| WO 2023130154 A1 | 13-07-2023 | NONE | | |
| US 2009318256 A1 | 24-12-2009 | AU | 2007302614 A1 | 03-04-2008 |
| | | US | 2009318256 A1 | 24-12-2009 |
| | | WO | 2008037014 A1 | 03-04-2008 |
| WO 2014026269 A1 | 20-02-2014 | AU | 2013302256 A1 | 02-04-2015 |
| | | CA | 2816624 A1 | 14-02-2014 |
| | | CN | 104854373 A | 19-08-2015 |
| | | EP | 2890917 A1 | 08-07-2015 |
| | | US | 2015219192 A1 | 06-08-2015 |
| | | WO | 2014026269 A1 | 20-02-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 3098102 A1
- EP 2241785 B1
- US 20110048858 A1
- US 2011041630 A1
- ES 2223309 B1
- US 20010308337 A1
- WO 02103888 A2
- US 200410130227 A1